# EUROPEAN PATENT APPLICATION

(11) **EP 3 285 517 A1**
(43) Date of publication of application: **21.02.2018**
(21) Application number: 16290155.7
(22) Date of filing: 17.08.2016
(51) Int. Cl.: H04W 24/10, H04B 7/06, H04W 16/28, H04W 64/00, H04W 72/04

(54) **METHODS, DEVICES AND COMPUTER PROGRAMS FOR OPERATING A WIRELESS TELECOMMUNICATIONS NETWORK**

(71) Applicant: ALCATEL LUCENT, 92100 Boulogne-Billancourt (FR)
(72) Inventor: Aziz, Danish, 70435 Stuttgart (DE); Malanchini, Ilaria, 70435 Stuttgart (DE)
(74) Representative: DREISS Patentanwälte PartG mbB

(57) **Abstract**

Methods and devices for operating user equipment in a wireless telecommunications network, comprising:
receiving (701) at a user equipment information about a measurement configuration for a sensor in a message according to a control plane protocol for procedures related to radio access,
configuring the user equipment for measuring data according to the received information,
operating (710, 712, 713) the user equipment for storing information about measured data according to the configuration, or
operating (710, 712, 713) the user equipment for storing information about measured data according to the configuration and/or for sending (713, 715) information about measured data in an uplink to the wireless telecommunications network (100).

## Description

### Field of the invention

Embodiments relate to methods, devices and computer programs for operating a wireless telecommunications network.

### Background

This section introduces aspects that may be helpful in facilitating a better understanding of the invention(s). Accordingly, the statements of this section are to be read in this light and are not to be understood as admissions about what is in the prior art or what is not in the prior art.

Millimeter Wave, mmW, access points, mmAPs, in telecommunications networks ensure the delivery of high data rates to User Equipments, UEs using directional radio beams. The urban-micro mmW channel is generally characterized by a low number of possible paths, LOS and Non-LOS, between base station and UE, from which in most cases probably only one path, mainly LOS, will be used for transmission with high gain, narrow half-power beam width antenna beams. Due to the shorter wavelengths, very high order phased antenna arrays can be built with very low spatial dimensions. With the help of antenna arrays, highly directional beams can be formed to increase the coverage range and compensate the path loss. This method is well known as beamforming. In order to mitigate the waste of energy and to increase the received signal to noise ratio, SNR, the mmW data transmission is used inherently with beamforming. However, during data transmission, the UE or the mmAP has to constantly track the optimum beam. This is regarded as beamtracking.

However, it is challenging to provide highly reliable and uninterrupted data transfer to the UEs using the mmW technology. Due to the propagation characteristics of mmWs, link blockage may appear due to obstruction in Line of Sight, LOS, connection between serving mmAP and the UE. This blockage may cause high interruption times. Furthermore not only the translation movements, e.g. linear motion, but also the rotational movements, e.g. change of direction, of the user, and or the UE, may cause link blockages.

In order to maintain reliable connectivity with narrow beams, anticipation of user movements helps to predict the best possible beams. However, in order to be able to provide high accuracy, prediction mechanisms need to be able to anticipate the randomness of the mobility or movement process of the UE.

The usage of data collected by physical sensors available in the UEs, such as accelerometer, gyroscope, motion sensors, as well as others, facilitates movement prediction and in general any anticipatory mechanisms. Physical sensors could also be sensors which are controlled by a UE nearby those sensors. To that end, corresponding data is processed on network side, i.e. by one or more network nodes. Different anticipatory mechanisms may require data of different sensors, or different update rates or data formats.

### Summary

It is an object of the present invention to provide a configurable, fast and reliable network interface to the UEs.

This object is achieved by methods and devices as well as computer programs for operating a wireless telecommunications network.

Regarding the abovementioned methods, this objective is achieved by receiving at a user equipment information about a measurement configuration for a sensor in a message according to a control plane protocol for procedures related to radio access, configuring the user equipment for measuring data according to the received information, operating the user equipment for storing information about measured data according to the configuration, or operating the user equipment for storing information about measured data according to the configuration and/or for sending information about measured data in an uplink to the wireless telecommunications network.

Configuring the user equipment allows to adjust the measurement to the need of a network function. The two modes provide an option collect and send data or information about the collected data for the network function when an uplink is available for the UE, and to at least collect data or information about the collected data for the network function while no uplink is available.

Preferably the control plane protocol for procedures related to radio access is a Radio Resource Control, RRC, protocol, in particular according to 3GPP TS 136 331 V13.1.0 (2016-04) or later. On RRC layer, communication is with lower latency or delay than when using other layers.

Preferably the information about the measurement configuration is received as Radio Resource Control, RRC, protocol layer message.

Preferably the information about the measured data is sent as Radio Resource Control, RRC, protocol layer message.

Preferably the information about the measured data is sent upon receipt of a corresponding control plane message for requesting the information about the measured data.

This way information about the latest available measurement may be pulled by the network function when needed. This reduces uplink bandwidth, as information is only sent when needed by the network function.

Preferably the information about the measured data is sent periodically.

This way information about the latest available measurement is pushed to the network function without control signalling overhead for requesting data. This reduces downlink bandwidth, as information is always sent without waiting for a request.

Preferably sending the information about the measured data is triggered in the user equipment by a predetermined event detected by the user equipment.

This way uplink and downlink bandwidth is saved, as data is not continuously or periodically requested or sent, but only when a predetermined event triggers the sending. The event may for example be detection of an acceleration measured by the user equipment's accelerometer, and exceeding a predetermined threshold. This may indicate sudden movement of the user equipment that requires fast reselection of a new optimum beam.

Preferably the information about the measured data is sent upon successful establishment of an uplink from the user equipment to the network.

This way, the network function receives data that was collected and stored while no uplink was available.

Preferably statistical information regarding the measured data is sent instead of sending the respective information about the measured data.

This reduces the network uplink bandwidth consumption.

Preferably movement of the user equipment is detected, the measured data represents information about the detected movement, and the measured data is sent as Radio Resource Control, RRC, protocol layer message.

When using directional radio links, the radio link quality changes depending on the relative position of user equipment and an access point providing the directional radio link. As a result of a movement of the user equipment, the radio link quality may change. Detecting movement of the user equipment directly, instead of deriving it from parameters indicating radio link quality that changes as result of the movement, reduces the time for recognition. Reporting this information in a RRC protocol layer message provides this information much faster to an Evolved Node B, eNB, as compared to using a higher level protocol.

Preferably a directional radio link is selected by the user equipment for connecting the user equipment to the wireless telecommunications network depending on information about the measured data.

The network function may be an anticipatory mechanism that determines the future position of the user equipment for selecting a corresponding next link based the information about the measured data. This improves handover from one directional radio link to another.

Regarding the abovementioned methods, this objective is achieved by sending, addressed to a user equipment, information about a measurement configuration for a sensor in a message according to a control plane protocol for procedures related to radio access, for configuring the user equipment for measuring data according to the received information, operating a network node for waiting for information about measured data stored by the user equipment according to the configuration, or operating the network node for receiving information about measured data in an uplink to the wireless telecommunications network.

Sending information about a measurement configuration to the user equipment provides an interface for network functions to adjust the measurement configuration of the user equipment. The first way of operating the network node provides the option to wait for collected data while the user equipment is not connected via an uplink. During this time the user equipment may still be configured by a corresponding measurement configuration to at least collect data or information about the collected data, e.g. for network functions, while no uplink is available. The second way of operating the network node provides the option to receive collected data or information about the collected data, e.g. for network functions, when an uplink is available for the UE.

Preferably the control plane protocol for procedures related to radio access is a Radio Resource Control, RRC, protocol, in particular according to 3GPP TS 136 331 V13.1.0 (2016-04) or later. On RRC layer, communication is with lower latency or delay than when using other layers.

Preferably the information about the measurement configuration is sent as Radio Resource Control, RRC, protocol layer message.

Preferably the information about the measured data is received as Radio Resource Control, RRC, protocol layer message.

Preferably the information about the measured data is requested by sending of a corresponding control plane message for requesting the information about the measured data.

This way information about the latest available measurement may be pulled by the network function when needed. This reduces uplink bandwidth, as information is only sent when needed by the network function.

Preferably the information about the measured data is requested upon successful establishment of an uplink from the user equipment to the network.

This way, the network function may request the latest measured data that was collected and stored while no uplink was available.

Preferably statistical information regarding the measured data is received instead of sending the respective information about the measured data.

This reduces the network uplink bandwidth consumption.

Preferably the measured data represents information about detected movement of user equipment, and the measured data is received as Radio Resource Control, RRC, protocol layer message.

Receiving information about detected movement of the user equipment directly, instead of deducting it from parameters indicating radio link quality that changes as result of the movement, improves recognition speed. Receiving this information in a RRC protocol layer message provides this information much faster to the Evolved Node B, eNB, as compared to using a higher level protocol.

Preferably a directional radio link is selected for the user equipment for connecting the user equipment to the wireless telecommunications network depending on information about the measured data.

The network node may execute a network function, e.g. implementing an anticipatory mechanism. The network function may determine a prediction of a future position of the user equipment for selecting a corresponding next directional radio link based on the information about the measured data. This improves the radio link anticipatory mechanism.

Regarding the abovementioned devices, this objective is achieved by a user equipment comprising a processor, memory and a transceiver, wherein the user equipment is configured for receiving information about a measurement configuration for a sensor in a control plane message according to a control plane protocol for procedures related to radio access, configuring the user equipment for measuring data according to the received information, operating the user equipment for storing information about measured data according to the configuration, or operating the user equipment for storing information about measured data according to the configuration and/or for sending information about measured data in an uplink to the wireless telecommunications network.

Regarding the abovementioned devices, this objective is further achieved by a network node comprising a processor, memory and a transceiver, wherein the network node is configured for sending, addressed to a user equipment, information about a measurement configuration for a sensor in a control plane message according to a control plane protocol for procedures related to radio access, for configuring the user equipment for measuring data according to the received information, operating a network node for waiting for information about measured data stored by the user equipment according to the configuration, or operating the a network node for receiving information about measured data in an uplink to the wireless telecommunications network.

Regarding the above mentioned devices, this objective is further achieved by a user equipment for operating in a wireless telecommunications network comprising a processor, memory and a transceiver, wherein the user equipment is configured for receiving information about measurement results of at least one sensor related to a further user equipment via a radio connection to a network node and in a message according to a control plane protocol for procedures related to radio access, and operating the user equipment dependent on the received information. The information about a measurement is provided quickly via the control plane protocol for procedures related to radio access. The distributed information is thus available much quicker for operating the user equipment. This allows implementation of functions, e.g. in Vehicle to X communication, relying on fast access to such measurement.

### Brief description of the figures

Some other features or aspects will be described using the following non-limiting embodiments of devices or methods or computer programs or computer program products by way of example only, and with reference to the accompanying figures, in which:
- Fig. 1: schematically depicts aspects of a protocol stack according to the 3GPP Longterm Evolution standard,
- Fig. 2: schematically depicts an environment and technical details of an implementation of layer three processing including Radio Resource Control data generation and transmission,
- Fig. 3: depicts schematically a sequence diagram of a method for operating the telecommunications network according to a first embodiment,
- Fig. 4: depicts schematically a sequence diagram of a method for operating the telecommunications network according to a second embodiment,
- Fig. 5: depicts schematically a sequence diagram of a method for operating the telecommunications network according to a third embodiment,
- Fig. 6a,b: depicts schematically a sequence diagram of a method for operating the telecommunications network according to a fourth embodiment,
- Fig. 7: depicts schematically a flow chart of a method for operating user equipment in the telecommunications network, according to a fifth embodiment
- Fig. 8: depicts schematically a flow chart of a method for operating user equipment in the telecommunications network according to a sixth embodiment,
- Fig. 9: depicts schematically a sequence diagram of a method for operating the telecommunications network according to a seventh embodiment.
- Fig. 10: depicts schematically a sequence diagram of a method for operating the telecommunications network according to an eight embodiment.

### Description of the embodiments

Mobile communication systems are for example General Packet Radio Service, GPRS, Universal Mobile Telecommunications System, UMTS, Long Term Evolution, LTE, or 5th-generation mobile communication systems, 5G.

Such mobile communication systems, e.g. LTE or 5G, may comprise a control plane and a user plane. The control plane handles radio-specific administrative functionality, e.g. Radio Resource Control, RRC, for assigning radio resources for transmission, or the paging of mobile transceivers to determine their location or their associated base station transceiver in the mobile communication system. The user plane handles the transfer of user data, e.g. Internet Protocol-packets or calls.

In the following description, Millimeter Wave, mmW, radio links refer to wireless links using radio waves having wavelengths from ten to one millimeter.

The urban-micro mmW channel is generally characterized by a low number of possible paths, LOS and Non-LOS, between base station and UE, from which in most cases probably only one path, mainly LOS, will be used for transmission with high gain, narrow half-power beam width antenna beams. Due to the shorter wavelengths, very high order phased antenna arrays can be built with very low spatial dimensions. With the help of antenna arrays, highly directional beams can be formed to increase the coverage range and compensate the path loss. This method is well known as beamforming. A beam forms a directional radio link between UE and base stations. In order to mitigate the waste of energy and to increase the received signal to noise ratio, SNR, the mmW data transmission is used inherently with beamforming. However, during data transmission, the UE or the mmAP has to constantly track the optimum beam. This is regarded as beam tracking.

Corresponding mmW access points, mmAP and UEs are adapted to exchange data over these wireless data links.

The communications at mmW with beamforming requires the establishment of the link, e.g. initial search for the optimum beam including for access point discovery, and also the tracking of the link, e.g. maintaining the optimum beam, during the data transmission.

In order to predict the best beam, anticipatory mechanisms require channel variations statistics. Once the UE is in connected state, these statistics can be built on the fly with the help of channel quality feedbacks as well as the change of optimum beam index.

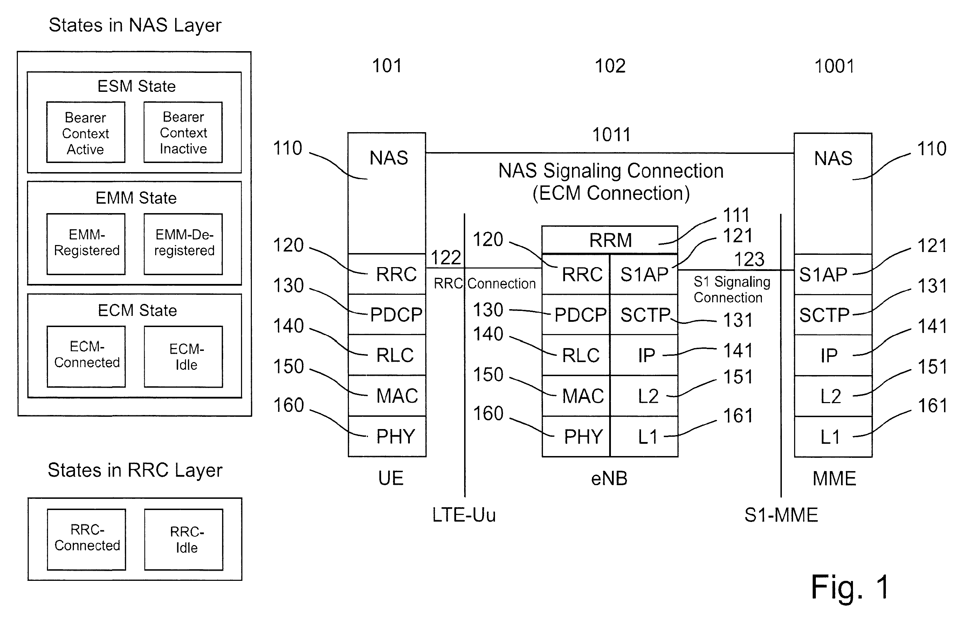

According to the methods describe below, the initial phase of communications may benefit from the anticipatory mechanisms. In addition to that, these statistics, if available, are also be used to set suitable parameters for guaranteeing the link reliability or the link monitoring. Fig. 1 schematically depicts aspects of a protocol stack according to the 3GPP Longterm Evolution, LTE, standard.

According the LTE protocol stack Non-Access Stratum, NAS, layer protocol 110 resides above Radio Resource Control, RRC, layer protocol 120 in User Equipment, UE, 101 and S1 Application Protocol, S1AP, 121 in Mobility Management Entity, MME, 1001. UE 101 and MME 1001 may communication via a NAS signaling connection 1011. RRC is for example implemented according to 3GPP TS 136 331 V13.1.0 (2016-04). S1AP is for example implanted according to 3GPP TS 36.413 V8.1.0 (2008-03).

A network node 102 configured as evolved node B, eNB, 102 implements Radio resource management, RRM, 111. The eNB is configured to communicate using RRC and S1AP protocol. A corresponding RRC link 122 may connect UE 101 and eNB 102. A corresponding S1AP link 123 may connect eNB 102 and MME 1001. RRM is for example implemented according to TS 136 521-3 V8.4.0 (2010-06).

On further layers below RRC layer 120, eNB 102 and UE 101 are adapted to communicate on links according to respective further protocols.

Below RRC layer 120 the Packet Data Converged Protocol, PDCP, layer 130 is implemented, e.g. according to TS 36.323 V8.6.0 (2009-07).

Below PDCP layer 130, a Radio Link Control, RLC, layer 140 is implemented, e.g. according to TS 125 322 V8.9.0 (2010-06).

Below RLC layer 140, a Media Access Control, MAC, layer 150 is implemented, e.g. according to TS 136 321 V8.12.0 (2012-03).

Below MAC layer 150 a Physical Layer, PHY, 160 is implemented, e.g. according to TS 136 213 V8.8.0 (2009-10).

On further layers below S1AP layer 121, eNB 102 and MME 1001 are adapted to communicate on links according to respective further protocols.

Below S1AP layer 121, a Stream Control Transmission Protocol, SCTP, layer 131 is implemented, e.g. according to RFC 4960 (September 2007).

Below SCTP layer 131 an Internet Protocol, IP, layer 141 is implemented, e.g. according to RFC 791 (September 1981).

Below IP layer 141, Layer 2, L2, 151 and below L2 151, Layer 1, L1 161 is implemented. L2 is the data link layer L1 is the physical layer and may support any suitable data link layer protocol and physical layer protocol respectively. For example Point to Point Protocol, PPP, over Ethernet, e.g. according to RFC 2516 (February 1999) may be used.

Instead of any of the aforementioned protocols, suitable later versions of the respective protocol may be used as well.

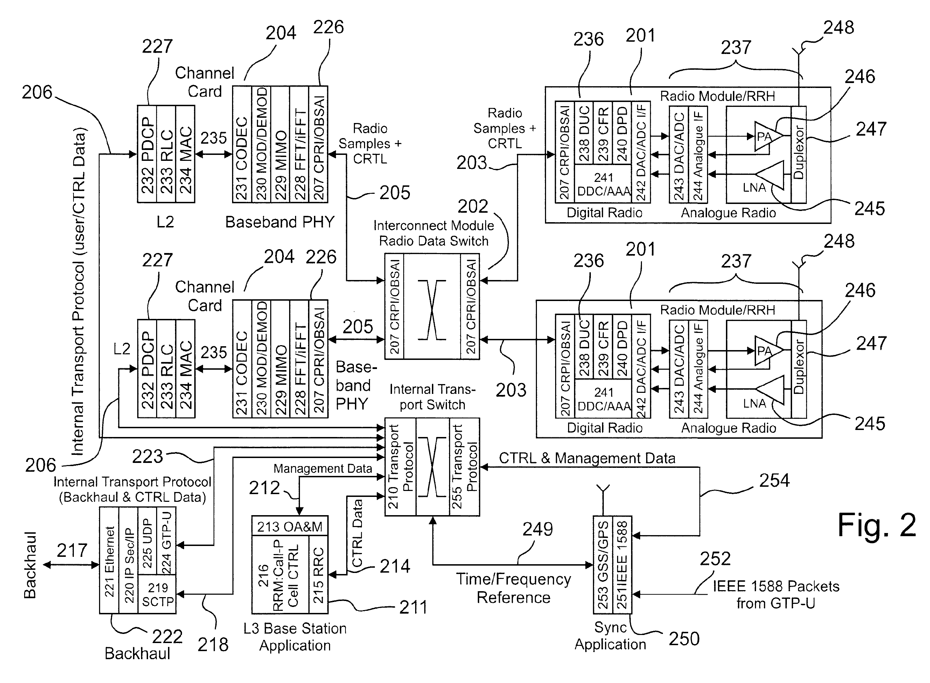

Fig. 2 schematically depicts an environment and technical details of an implementation of layer 3 processing including Radio Resource Control data generation and transmission, as implemented in an exemplary LTE macro cell base station. The functions explained below relate to digital signal processing and could thus be implemented using e.g. a processor, e.g. DSP and associated memory with specific software. The whole Fig. 2 could be implemented using 1 FPGA where for example the radio part is an extra device, e.g. a frontend or a remotely located radio head.

Radio Modules or Radio Remote Heads 201 and an Interconnect Module 202 are connected via data links 203 for exchange of Radio Samples and Control Data.

Modules 204 and the Interconnect Module 202 are connected via data links 205 for exchange of Radio Samples and Control Data and via data links 206 using an Internal Transport Protocol for exchange of User Data and Control Data.

For data links 203 and 205 Common Public Radio Interface, CPRI, and Open Base Station Architecture Initiative, OBSAI, interfaces 207 are implemented in the Modules 204 and the Radio Modules 201. Modules 204 comprise for example Packet Data Convergence Protocol, PDCP, interfaces 232 for data links 206. Interconnect Module 202 comprises for example a corresponding interface as well implemented in a Transport Protocol Interfaces 210.

Management Data can be exchanged between the Interconnect Module 202 and a Layer 3 Base Station Application 211 via a data link 212 using a suitable Operations Administration and Maintenance protocol. A corresponding Operations Administration and Maintenance Interface 213 is implemented for the Layer 3 Base Station Application 211 and in Transport Protocol Interface 210.

Control Data, in particular Radio Resource Control, RRC, Data, can be exchanged between the Layer 3 Base Station Application 211 via a data link 214. A corresponding Radio Resource Control, RRC, Interface 215 is implemented for the Layer 3 Base Station Application 211 and in Transport Protocol Interface 210.

These interfaces enable a Radio Resource Management function 216 implemented in the Layer 3 Base Station Application 211 to provide Call Procedures and Cell Control.

Interconnect Module 202 is connectable to a backhaul 217 via a data link 218 using the Stream Control Transmission Protocol, SCTP, 219, Internet Protocol Security Protocol Suite 220 and Ethernet 221. Transport Protocol Interface 210 and a backhaul interface 222 implement these. Interconnect Module 202 is furthermore connectable to backhaul 217 via a data link 224 using General Packet Radio Service Tunneling Protocol GPRS-P, 223, and User Datagram Protocol, UDP, 225. Transport Protocol Interface 210 and a backhaul interface 222 implement these.

The modules 204 each implements Baseband Physical Layer, Baseband PHY, 226, and Layer 2, L2, 227.

In baseband PHY, 226, additionally to Open Base Station Architecture Initiative, OBSAI, interface 207, Fast Fourier Transform, FFT, and inverse Fast Fourier Transform, iFFT, functions 228, Multiple Input Multiple Output, MIMO, function 229, Modulation, MOD, and Demodulation, DEMOD, function 230 and Coder / Decoder, CODEC, function 231 are implemented.

In L2, 227, a Packet Data Convergence Protocol, PDCP, interface 232 to the Interconnect Module 202 is implemented via data link 206. Furthermore a Radio Link Control, RLC, layer 233 and a Media Access Control layer 234 are implemented as well.

Media Access Control layer 234 interfaces with the CODEC function 231 of the baseband PHY 226 of the respective module 204 via data link 235.

Each Radio Module 201 comprises a Digital Radio 236 and an Analog Radio 237. The Digital Radio 236 comprises Open Base Station Architecture Initiative, OBSAI, interface 207 and implements a Digital Up Converter, DUC, 238, Crest Factor Reduction, CFR, 239, Digital Pre Distortion, DPD, 240, and Digital Down Converter / Analog Down Converter, DDC, ADC, 241.

Each Radio Module 201 comprises a Digital Analog Converter / Analog Digital Converter Interface, DAC ADC I/F, 242 that interfaces with a corresponding Digital Analog Converter / Analog Digital Converter, DAC ADC, 243 implemented in the respective Analog Radio 237.

Each Analog Radio 237 comprises an Analog Interface 244 connecting an input of DAC ADC, 243 to a Low-Noise Amplifier, LNA, 245 and an output of DAC ADC, 243 to a Power Amplifier, PA, 246 respectively. LNA 245 and PA 246 connect to a Duplexer 247 for bi-directional communication over an antenna 248.

Additionally Interconnect Module 202 receives via a data link 249 a time and/or frequency reference from a Synchronization application 250. The Synchronization Application 250 comprises a IEEE 1588 interface 251 to receive in the example time synchronization data according to IEEE 1588 via a data link 252 e.g. from a GTP-U unit (not depicted). The Synchronization Application 250 may comprise a Global Positioning System receiver 253 as well, to receive time synchronization data. A timing or frequency synchronization signal is determined by the Synchronization Application 250 based on received time synchronization data.

Furthermore, through a further data link 254, Synchronization Application 250 and Interconnect Module 202 may exchange Control and Management Data as well. Interconnect Module 202 comprises a corresponding Transport Protocol interface 255.

The following description refers to control signaling messages that may be implemented in any suitable of the aforementioned layers. Preferably, the radio resource control layer RRC is used. RRC is used in above mentioned example between UE 101 and eNB 102.

RRC is generated as Control data and distributed via the Interconnect Module 202 and Radio Module 201.

Radio Module 201 is a radio transceiver. RRC may be implemented as software, stored using memory, and may be executed by processors. RRC may be implemented as Field-programmable gate array, FPGA, as well.

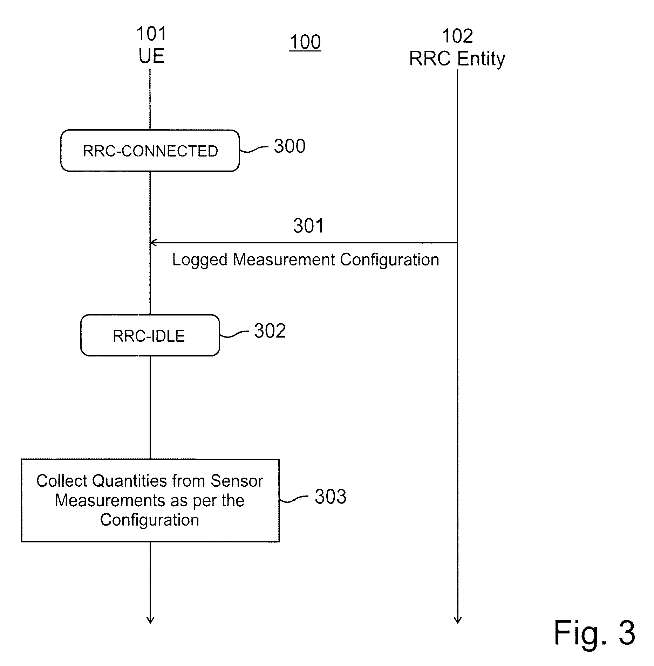

Figs. 3 to 6 depict schematically sequence diagrams of methods for operating a telecommunications network 100.

According to the embodiments described below referencing. Figs. 3 to 6, user equipment, UE, 101 and a network node 102 are connectable via a mmW link. The mmW link connects the UE 101 to a mmAP of the telecommunications network 100.

The principles of the protocol stack according to the 3GPP Longterm Evolution, LTE that has been described above apply also to the embodiments described below. The network node 102 may be an eNB 102 that additionally operates as the mmAP. While the embodiments reference network node 102, it is clear to the person skilled in the art that any functions implemented in the network node 102 described below, may be distributed on several nodes in the telecommunications network 100. The Radio resource control in the embodiments may be implemented as protocol entity. The protocol entity may operate in similar way using radio links according to the 3GPP Longterm Evolution, LTE, according to aforementioned specifications, earlier or later versions thereof or as mmW links.

According to the embodiments a control plane protocol for procedures related to radio access is the Radio Resource Control, RRC, protocol, in particular according to 3GPP TS 136 331 V13.1.0 (2016-04) or later. In this context according to 3GPP TS 136 331 V13.1.0 (2016-04) or later means that the standardized protocol may be amended with extensions to realize the functionality as described below. The principles for communication on the RRC layer remain according to the standards. Any other suitable control plane protocol for procedures related to radio access may be used as well. Radio access may be established using Radio Access Technology, RAT, as underlying physical connection method for any radio based part of the telecommunications network 100.

In the following description two embodiments of an interface between UE 101 and network node 102 are described. The interface is used to transfer information regarding a measurement configuration from the network node 102 to the UE 101 and to transfer information regarding measured data from the UE 101 to the network node 102.

UE 101, according to the embodiment, may operate in two different operating modes, namely in an idle state and a connected state. The idle state is a state where UE 101 has no uplink connection to the network node 102. The idle state is e.g. a radio resource control idle state, RRC-IDLE state, according to 3GPP TS 136 331 V13.1.0 (2016-04).

The connected state is a state where UE 101 has uplink connection to the network node 102. The connected state is e.g. a radio resource control connected state, RRC-CONNECTED state, according to 3GPP TS 136 331 V13.1.0 (2016-04).

In both operating modes UE 101 is listening for messages from the wireless telecommunications network 100.

While in general other operating modes may exist as well, in particular low overhead RRC-Connected states may be used. In the example the UE 101 operates either in RRC-IDLE state or RRC-CONNECTED whenever it is turned on.

According to a first embodiment, as depicted in figure 3, UE 101 is configured to operate in the second operating mode, e.g. in RRC-CONNECTED state 300.

Accordingly, the network node 102 is configured to operate in the respective second operating mode as well.

In the second operating mode, the network node 102 sends a first message 301, addressed to the UE 101.

The first message 301 is a control plane message comprising information about a measurement configuration.

The information about the measurement configuration is for configuring the UE 101 for measuring data according to the received information.
Preferably, a LoggedMeasurementConfiguration according to 3GPP TS 136 331 V13.1.0 (2016-04) is amended with new Information elements is used for conveying this configuration. The new elements are described below.

3GPP TS 136 331 V13.1.0 (2016-04) provides in the general message structure a DL-DCCH-Message class. This class is amended by new elements UEInformationRequest-5G, UESensorInformationRequest, LoggedMeasurementConfiguration-5G, LoggedMeasurementConfiguration-Sensors. This results in the example in the following structure:

### --ASN1START

```
DL-DCCH-Message ::= SEQUENCE {message DL-DCCH-MessageType
 }
 DL-DCCH-MessageType ::= CHOICE {
 c1 CHOICE {
 csfbParametersResponseCDMA2000 CSFBParametersResponseCDMA2000,
 dlInformationTransfer DLInformationTransfer,
 handoverFromEUTRAPreparationRequest HandoverFromEUTRAPreparationRequest,
 mobilityFromEUTRACommand MobilityFromEUTRACommand,
 rrcConnectionReconfiguration RRCConnectionReconfiguration,
 rrcConnectionRelease RRCConnectionRelease,
 securityModeCommand SecurityModeCommand,
 ueCapabilityEnquiry UECapabilityEnquiry,
 countercheck CounterCheck,
 ueInformationRequest-r9 UEInformationRequest-r9,
 Option1-ueInformationRequest-5G UEInformationRequest-5G,
 Option2-ueSensorInformationRequest UESensorInformationRequest,
 loggedMeasurementConfiguration-r10 LoggedMeasurementConfiguration-r10,
 Option1-loggedMeasurementConfiguration-5G LoggedMeasurementConfiguration-5G,
 Option2-loggedMeasurementConfiguration-Sensors LoggedMeasurementConfiguration-Sensors,
 rnReconfiguration-r10 RNReconfiguration-r10,
 spare4 NULL,
 spare3 NULL, spare2 NULL, spare1 NULL
 },
 messageClassExtension SEQUENCE {}
 }
```

### --ASN1STOP

Accordingly UL-DCCH-Message according to 3GPP TS 136 331 V13.1.0 (2016-04) is amended by new elements MeasurementReportSensors, UEInformationResponse-5G, UESensorInformationResponse.

The resulting UL-DCCH-Message class is the set of RRC messages that may be sent from the UE 101 on the uplink DCCH logical channel. The amended structure is as follows:

### --ASN1START

```
 UL-DCCH-Message ::= SEQUENCE {
     message UL-DCCH-MessageType
     }
 UL-DCCH-MessageType ::= CHOICE {
     c1 CHOICE {
     csfbParametersRequestCDMA2000 CSFBParametersRequestCDMA2000,
     measurementReport MeasurementReport,
     measurementReportSensors MeasurementReportSensors,
     rrcConnectionReconfigurationComplete RRCConnectionReconfigurationComplete,
     rrcConnectionReestablishmentComplete RRCConnectionReestablishmentComplete,
     rrcConnectionSetupComplete RRCConnectionSetupComplete,
     securityModeComplete SecurityModeComplete,
     securityModeFailure SecurityModeFailure,
     ueCapabilityInformation UECapabilityInformation,
     ulHandoverPreparationTransfer ULHandoverPreparationTransfer,
     ulInformationTransfer ULInformationTransfer,
     counterCheckResponse CounterCheckResponse,
     ueInformationResponse-r9 UEInformationResponse-r9,
     Option1-ueInformationResponse-5G UEInformationResponse-5G,
     Option2-ueSesnorInformationResponse UESensorInformationResponse,
     proximityIndication-r9 ProximityIndication-r9,
     rnReconfigurationComplete-r10 RNReconfigurationComplete-r10,
     mbmsCountingResponse-r10 MBMSCountingResponse-r10,
     interFreqRSTDMeasurementIndication-r10 InterFreqRSTDMeasurementIndication-r10
     },
     messageClassExtension CHOICE {
     c2 CHOICE {
          ueAssistanceInformation-r11 UEAssistanceInformation-r11,
          inDeviceCoexIndication-r11 InDeviceCoexIndication-r11,
          mbmsInterestIndication-r11 MBMSInterestIndication-r11,
          scgFailureInformation-r12 SCGFailureInformation-r12,
          sidelinkUEInformation-r12 SidelinkUEInformation-r12,
          wlanConnectionStatusReport-r13
     WLANConnectionStatusReport-r13,
               spare10 NULL,
               spare9 NULL, spare8 NULL, spare7 NULL,
               spare6 NULL, spare5 NULL, spare4 NULL,
               spare3 NULL, spare2 NULL, space1 NULL
          },
          messageClassExtensionFuture-r11 SEQUENCE {}
     }
     }
```

### --ASN1STOP

Furthermore the Logged MeasurementConfiguration of 3GPP TS 136 331 V13.1.0 (2016-04) is amended with information elements required for logging the sensor measurements both in RRC_IDLE and in RRC_CONNECTED state. This is used to transfer the logged sensor measurement configuration for network performance optimization. In particular, with the extensions it will be used to support and optimize physical layer procedures such as fast beam switching, link monitoring and link adaptation in mmW access points.

The amendment is made to include a new sequence LoggedMeasurementConfiguration-5G-IEs as follows:

### --ASN1START

```
 LoggedMeasurementConfiguration-r10 ::= SEQUENCE {
     criticalExtensions CHOICE {
          c1 CHOICE {
 loggedMeasurementConfiguration-r1 0 LoggedMeasurementConfiguration-r10-IEs,
 spare3 NULL, spare2 NULL, spare1 NULL
          },
 criticalExtensionsFuture SEQUENCE {}
 }
 }
 LoggedMeasurementConfiguration-r10-IEs ::= SEQUENCE {
 traceReference-r10 TraceReference-r10,
 traceRecordingSessionRef-r10 OCTET STRING (SIZE (2)),
 tce-Id-r10 OCTET STRING (SIZE (1)),
 absoluteTimeInfo-r10 AbsoluteTimeInfo-r10,
 areaConfiguration-r10 AreaConfiguration-r10 OPTIONAL, -- Need OR
 loggingDuration-r10 LoggingDuration-r10,
 loggingInterval-r10 LoggingInterval-r10,
 nonCriticalExtension LoggedMeasurementConfiguration-v1080-IEs OPTIONAL
 }
 LoggedMeasurementConfiguration-5G-IEs ::= SEQUENCE {
 traceReference-r10 TraceReference-r10,
 traceRecordingSessionRef-r10 OCTET STRING (SIZE (2)),
 tce-ld-r10 OCTET STRING (SIZE (1)),
 absoluteTimeInfo-r10 AbsoluteTimeInfo-r10,
 areaConfiguration-r10 AreaConfiguration-r10
          OPTIONAL,-- Need OR
 loggingDuration-r10 LoggingDuration-r10,
 loggingInterval-r10 LoggingInterval-r10,
 nonCriticalExtension LoggedMeasurementConfiguration-v1080-IEs
          OPTIONAL
 listOfSensorsToBeMeasured ListOfSensorsToBeMeasured OPTIONAL,
 listOfQuantitiesToBeMeasured ListOfQuantitiesToBeMeasured OPTIONAL,
 listOfStatisticalParametersForEachQuantity ListOfStatisticalParametersForEachQuantity,
          OPTIONAL,
 listOfLoggingDurationForBuildingStatisticalParameterForEachListedSensor
           ListOfLoggingDurationForBuildingStatisticalParameterForEachListedSensor,
 listOfLoggingIntervalForEachListedSensor ListOfLoggingIntervalForEachListedSensor
 listOfTracesForEachQuantity ListOfTracesForEachQuantity, OPTIONAL,
 listOfLoggingDurationForEachListedSensor ListOfLoggingDurationForEachListedQuantity,
 targetSensorMeasurement-AreaList TargetSensorMeasurement-AreaList,
          OPTIONAL, -- Need OP
 listOfReportingStrategyForEachQuantity ListOfReportingStrategyForEachQuantity,
 }
 LoggedMeasurementConfiguration-v1080-IEs ::= SEQUENCE {
 lateNonCriticalExtension-r10 OCTET STRING OPTIONAL,
 nonCriticalExtension LoggedMeasurementConfiguration-v1130-IEs OPTIONAL
 }
 LoggedMeasurementConfiguration-v1130-IEs ::= SEQUENCE {
 plmn-IdentityList-r11 PLMN-IdentityList3-r11 OPTIONAL, -- Need OR
 areaConfiguration-v1130 AreaConfiguration-v1130 OPTIONAL, -- Need OR
 nonCriticalExtension LoggedMeasurementConfiguration-v1250-IEs OPTIONAL
 }
 LoggedMeasurementConfiguration-v1250-IEs ::= SEQUENCE {
 targetMBSFN-AreaList-r12 TargetMBSFN-AreaList-r12 OPTIONAL, -- Need OP
 nonCriticalExtension SEQUENCE {} OPTIONAL
 }
 TargetMBSFN-AreaList-r12 ::= SEQUENCE (SIZE (0..maxMBSFN-Area)) OF
          TargetMBSFN-Area-r12
          TargetMBSFN-Area-r12 ::= SEQUENCE {
          mbsfn-Areald-r12 MBSFN-Areald-r12 OPTIONAL, -- Need OR
          carrierFreq-r12 ARFCN-ValueEUTRA-r9,
          }
          TargetSensorMeasurement-AreaList::= SEQUENCE (SIZE (0..maxSenMeas-Area))
```

### --ASN1STOP

This way the first control plane message 301, includes new information elements identifying e.g. sensors or quantities to be measured and logged, duration, interval, or an area for measurements. This way the UE 101 is configured by the network node 102 using dedicated RRC signalling.

Consequently in the example the measurement configuration is received as Radio Resource Control, RRC, protocol layer message.

In the first embodiment, UE 101 is instructed to log a sensor measurement. Logging sensor measurement in this context refers to generating and storing measurement data. Measurement data is for example generated by a sensor configured to detect a physical quantity, transduce the physical quantity into an electrical signal and output a digital representation of the electrical signal as measurement data. The sensor is for example an accelerometer, gyroscope, or motion sensor.

According to the first embodiment, UE 101 is configured to log the measurements in RRC-IDLE state 302.

The RRC-Idle state 302 is the above mentioned first operating mode of the UE 101. If UE 101 transitions into this first operating mode, the network recognizes this transition.

Once UE 101 is in RRC-Idle state 302, quantities are collected in a step 303 from the sensor measurements according to the configuration.

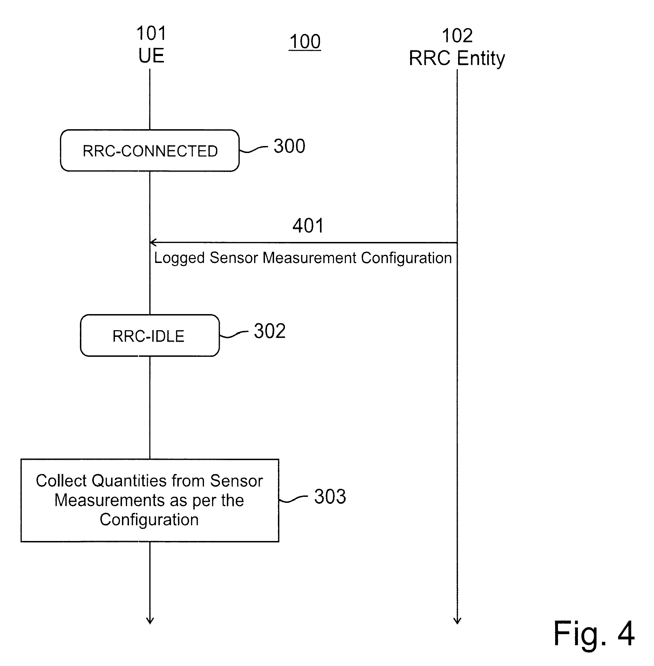

A second embodiment is described below referencing figure 4. According to the second embodiment, UE 101 is configured to operate in the second operating mode, e.g. in RRC-CONNECTED state 300 as described above for the first embodiment. UE 101 is further configured to transition and operate in the first operating mode, e.g. in RRC-IDLE state 302 to collect sensor data in step 303 as described above for the first embodiment.

In contrast to the first embodiment, according to the second embodiment a second control plane message 401, e.g. a new RRC message is sent to convey the information about the measurement configuration from network node 102 to UE 101. As in the first embodiment however, in this example the measurement configuration is received as Radio Resource Control, RRC, protocol layer message.

This new RRC message is for example named LoggedSensorMeasurementConfiguration and implemented by amending 3GPP TS 136 331 V13.1.0 (2016-04) as follows.
Signalling radio bearer: SRB1
RLC-SAP: AM
Logical channel: DCCH
Direction: E-UTRAN to UE

### --ASN1START

```
 LoggedMeasurementConfiguration-5G-IEs ::= SEQUENCE {
 absolute TimeInfo-r10 AbsoluteTimeInfo-r10,
 listOfSensorsToBeMeasured ListOfSensorsToBeMeasured OPTIONAL,
 listOfQuantitiesToBeMeasured ListOfQuantitiesToBeMeasured OPTIONAL,
 listOfStatisticalParametersForEachQuantity ListOfStatisticalParametersForEachQuantity,
          OPTINAL,
          listOfLoggingDurationForBuildingStatisticalParameterForEachListedSensor
          ListOfLoggingDurationForBuildingStatisticalParameterForEachListedSensor,
          listOfLoggingIntervalForEachListedSensor ListOfLoggingIntervalForEachListedSensor
          listOfTracesForEachQuantity ListOfTracesForEachQuantity, OPTIONAL,
          listOfLoggingDurationForEachListedSensor ListOfLoggingDurationForEachListedQuantity,
          targetSensorMeasurement-AreaList TargetSensorMeasurement-AreaList,
          OPTIONAL, -- Need OP
          listOfReportingStrategyForEachQuantity ListOfReportingStrategyForEachQuantity,
          }
          TargetSensorMeasurement-AreaList::= SEQUENCE (SIZE (0..maxSenMeas-Area))
```

### --ASN1STOP

Both, the LoggedMeasurementConfiguration and the LoggedSensorMeasurementConfiguration message may be used by a 5G network to configure the UE to perform logging of measurement results obtained from sensors while in RRC_IDLE or to perform logging of measurement results obtained from sensors while in both RRC_IDLE and RRC_CONNECTED.

The fields of messages LoggedMeasurementConfiguration or LoggedSensorMeasurementConfiguration are described below in Table 1.

**Table 1**

| ***LoggedMeasurementConfiguration*/ *LoggedSensorMeasurementConfiguration* field descriptions** |
|---|
| ***listOfSensorsToBeMeasured*** |
| Indicates a set of sensors present on the UE or connected to the UE. |
| ***listOfQuantitiesToBeMeasured*** |
| Used to indicate the quantities to be measured with the help of listed sensors. Extra provision if one sensor can provide two quantities. |
| ***listOfStatisticalParametersForEachQuantity*** |
| Indicates a set of statistical parameters related to each quantity e.g. mean, variance, moments etc. |
| ***listOfLoggingDuration*** |
| Indicates the duration over which the statistical parameters should be computed for each listed quantity. It can also be replaced by the number of samples to be considered for building statistical parameters. |
| ***listOfLoggingIntervalForEachListedSensor*** |
| The purpose of this parameter is to define the granularity of measurements e.g. in time. Number of samples within a given duration can also be given here |
| ***listOfTracesForEachQuantity*** |
| This indicates if traces are required for some quantity in addition to the statistical parameters or in replacement of them. |
| ***listOfLoggingDurationForTraces*** |
| This is used to specify the length of the trace e.g. time duration. It can be given in terms of number of samples. |
| ***targetSensorMeasurement-AreaList*** |
| This can be used if the sensor measurements are to be restricted within special geographical area or tracking area or location area or particular cells. E.g. only when the UE is in the mmW coverage area. |
| ***listOfReportingStrategyForEachQuantity*** |
| The presence of this parameter indicates that the UE shall continue measurements in RRC-CONNECTED state for the mentioned quantities. |

The LoggedMeasurementConfiguration message or the LoggedSensorMeasurementConfiguration message may be used to transfer the logged sensor measurement configuration for network performance optimization. In particular, it may be used to support and optimize physical layer procedures such as fast beam switching, link monitoring and link adaptation in mmW access points.

Furthermore the VarLogMeasConfig according to 3GPP TS 136 331 V13.1.0 (2016-04) is amended in the example. The UE variable VarLogMeasConfig includes the configuration of the logging of measurements to be performed by the UE while in RRC_IDLE, covering intra-frequency, inter-frequency, inter-RAT mobility and MBSFN related measurements. If MBSFN logging is configured, the UE performs logging of measurements while in both RRC_IDLE and RRC_CONNECTED. Otherwise, the UE performs logging of measurements only while in RRC_IDLE. This variable VarLogMeasConfig is in the example amended as follows, such that it supports the logging of measurements for sensors on the UE or connected to the UE while in both RRC_IDLE and RRC_CONNECTED states.
Signalling radio bearer: 5G-SRB1
RLC-SAP: 5G-AM
Logical channel: 5G-DCCH
Direction: 5G to UE

### --ASN1START

```
 VarLogMeasConfig-r10 ::= SEQUENCE {
 areaConfiguration-r10 AreaConfiguration-r10 OPTIONAL,
 loggingDuration-r10 LoggingDuration-r10,
 loggingInterval-r10 Logging Interval-r10
 }
 VarLogMeasConfig-r11 ::= SEQUENCE {
 areaConfiguration-r10 AreaConfiguration-r10 OPTIONAL,
 areaConfiguration-v1130 AreaConfiguration-v1130 OPTIONAL,
 loggingDuration-r10 LoggingDuration-r10,
 loggingInterval-r10 LoggingInterval-r10
 }
 VarLogMeasConfig-r12 ::= SEQUENCE {
 areaConfiguration-r10 AreaConfiguration-r10 OPTIONAL,
 areaConfiguration-v1130 AreaConfiguration-v1130 OPTIONAL,
 loggingDuration-r10 LoggingDuration-r10,
 loggingInterval-r10 LoggingInterval-r10,
 targetMBSFN-AreaList-r12 TargetMBSFN-AreaList-r12 OPTIONAL
 }
 VarLogMeasConfig-5G ::= SEQUENCE {
 areaConfiguration-r10 AreaConfiguration-r10 OPTIONAL,
 areaConfiguration-v1130 AreaConfiguration-v1130 OPTIONAL,
 loggingDuration-r10 LoggingDuration-r10,
 loggingInterval-r10 LoggingInterval-r10,
 targetMBSFN-AreaList-r12 TargetMBSFN-AreaList-r12 OPTIONAL
 LoggedMeasurementConfiguration-5G-IEs ::= SEQUENCE {
 absoluteTimeInfo-r10 AbsoluteTimeInfo-r10,
 listOfSensorsToBeMeasured ListOfSensorsToBeMeasured OPTIONAL,
 listOfQuantitiesToBeMeasured ListOfQuantitiesToBeMeasured OPTIONAL,
 listOfStatisticalParametersForEachQuantity
          ListOfStatisticalParametersForEachQuantity, OPTINAL,
          listOfLoggingDurationForBuildingStatisticalParameterForEachListedSensor
          ListOfLoggingDurationForBuildingStatisticalParameterForEachListedSensor,
          listOfLoggingIntervalForEachListedSensor ListOfLoggingIntervalForEachListedSensor
          listOfTracesForEachQuantity ListOfTracesForEachQuantity, OPTIONAL,
          listOfLoggingDurationForEachListedSensor ListOfLoggingDurationForEachListedQuantity,
          targetSensorMeasurement-AreaList TargetSensorMeasurement-AreaList,
          OPTIONAL, -- Need OP
          continueMeasurementlnRRCIdleState True/False
          }
          TargetSensorMeasurement-AreaList::= SEQUENCE (SIZE (0..maxSenMeas-Area))
          }
```

### --ASN1STOP

Additionally the UEInformationRequest according to 3GPP TS 136 331 V13.1.0 (2016-04) may be amended. The UEInformationRequest is the command used by E-UTRAN to retrieve information from the UE. This command is amended by introducing new information elements which are used by the network to retrieve the sensor measurement reports from the UE as follows.
Signalling radio bearer: SRB1
RLC-SAP: AM
Logical channel: DCCH
Direction: E UTRAN to UE

### --ASN1START

```
 UEInformationRequest-r9::= SEQUENCE {
 rrc-TransactionIdentifier RRC-TransactionIdentifier,
 criticalExtensions CHOICE {
     c1 CHOICE {
     ueInformationRequest-r9 UEInformationRequest-r9-IEs,
     spare3 NULL, spare2 NULL, spare1 NULL
     },
     criticalExtensionsFuture SEQUENCE {}
     }
     }
     UEInformationRequest-r9-IEs ::= SEQUENCE {
     rach-ReportReq-r9 BOOLEAN,
     rlf-ReportReq-r9 BOOLEAN,
     nonCriticalExtension UEInformationRequest-v930-IEs OPTIONAL
 }
 UEInformationRequest-v930-IEs ::= SEQUENCE {
 lateNonCriticalExtension OCTET STRING OPTIONAL,
 nonCriticalExtension UEInformationRequest-v1020-IEs OPTIONAL
 }
 UEInformationRequest-v1020-IEs ::= SEQUENCE {
 logMeasReportReq-r10 ENUMERATED {true} OPTIONAL, -- Need ON
 nonCriticalExtension UEInformationRequest-v1130-IEs OPTIONAL
 }
 UEInformationRequest-v1130-IEs ::= SEQUENCE {
 connEstFailReportReq-r11 ENUMERATED {true} OPTIONAL, -- Need ON
 nonCriticalExtension UEInformationRequest-v1250-IEs OPTIONAL
 }
 UEInformationRequest-v1250-IEs ::= SEQUENCE {
 mobilityHistoryReportReq-r12 ENUMERATED {true} OPTIONAL, -- Need ON
 nonCriticalExtension SEQUENCE {} OPTIONAL
 }
 UEInformationRequest-5G-IEs ::= SEQUENCE {
 logSensorMeasReportReq-5G ENUMERATED {true} OPTIONAL, -- Need ON
     }
```

### --ASN1STOP

The UEInformationRequest field description e.g. comprises the following new entry:

### logSensorMeasReportReq-5G

This field is used to indicate whether the UE shall report logged sensor measurements.

Alternatively or additionally to this modification of the UEInformationRequest, the UESensorInformationRequest may be used in 5G networks as command to retrieve sensor logged measurement information from the UE as follows.
Signalling radio bearer: 5G-SRB1
RLC-SAP: 5G-AM
Logical channel: 5G-DCCH
Direction: 5G to UE

The corresponding UESensorInformationRequest message is for example defined in an amendment to 3GPP TS 136 331 V13.1.0 (2016-04) as follows:

### --ASN1START

```
 UEInformationRequest-5G-IEs ::= SEQUENCE {
 logSensorMeasReportReq-5G ENUMERATED {true} OPTIONAL, -- Need ON
     }
```

### --ASN1STOP

Accordingly a new description field for
UESensorInformationRequest is added with the following new entry:

### logSensorMeasReportReq

This field is used to indicate whether the UE shall report logged sensor measurements.

Accordingly, the logged measurement configuration according to 3GPP TS 136 331 V13.1.0 (2016-04) may be amended for example as follows:
The purpose of the logged measurement configuration procedure is to configure the UE to perform logging of measurement results while in RRC_IDLE and to perform logging of measurement results for MBSFN in both RRC_IDLE and RRC_CONNECTED. In addition to that it configures the UE to perform logging and reporting of sensor measurements in both RRC_IDLE and RRC_CONNECTED. The procedure applies to logged measurements capable UEs that are in RRC_CONNECTED.

For initiation E-UTRAN initiates the logged measurement configuration procedure to UE in RRC_CONNECTED by sending the aforementioned LoggedMeasurementConfiguration or the LoggedSensorMeasurementConfiguration message.

In one aspect, upon receiving the LoggedMeasurementConfiguration message the UE shall:
1> discard the logged measurement configuration as well as the logged measurement information as specified in section 5.6.7 of 3GPP TS 136 331 V13.1.0 (2016-04);
1> store the received loggingDuration, loggingInterval and areaConfiguration, if included, in VarLogMeasConfig;
1> store the received listOfSensorsToBeMeasured, listOfQuantitiesToBeMeasured,
   listOfStatisticalParametersForEachQuantity,
   listOfLoggingDurationForBuildingStatisticalParameterForEachListedSensor,
   listOfLoggingIntervalForEachListedSensor, listOfTracesForEachQuantity,
   listOfLoggingDurationForEachListedSensor, targetSensorMeasurement-AreaList, if included, in VarLogMeasConfig;
1> if the LoggedMeasurementConfiguration message includes plmn-IdentityList:
2> set plmn-IdentityList in VarLogMeasReport to include the RPLMN as well as the PLMNs included in plmn-IdentityList;
1> else:
2> set plmn-IdentityList in VarLogMeasReport to include the RPLMN;
1> store the received absoluteTimeInfo, traceReference, traceRecordingSessionRef and tce-ld in VarLogMeasReport;
1> store the received targetMBSFN-AreaList, if included, in VarLogMeasConfig;
1 > store the received targetMBSFN-AreaList, if included, in VarLogMeasConfig;
1> start timer T330 with the timer value set to the loggingDuration;
1> store the received continueMeasurementlnRRCIdleState,if included, in VarLogMeasConfig;

Accordingly, upon expiry of T330 according to 3GPP TS 136 331 V13.1.0 (2016-04); the UE releases VarLogMeasConfig. This means that UE is allowed to discard stored logged measurements, e.g. 48 hours after T330 expiry.

In another aspect, the procedures according to 3GPP TS 136 331 V13.1.0 (2016-04) are amended to define that upon receiving the LoggedSensorMeasurementConfiguration message the UE shall configure the UE to perform logging and reporting of sensor measurements in both RRC_IDLE and RRC_CONNECTED. The procedure applies to logged measurements capable UEs that are in RRC_CONNECTED.

In a 5G Network may retrieve stored logged measurement information by means of the UE information procedure.

For example a new section 5.6.6.XX "Initiation" is amended to 3GPP TS 136 331 V13.1.0 (2016-04) for allowing a 5G network to initiate the logged sensor measurement configuration procedure to UE in RRC_CONNECTED by sending the aforementioned LoggedSensorMeasurementConfiguration message.

Accordingly, upon reception of the LoggedSensorMeasurementConfiguration by the UE
the UE shall:
1> discard the logged sensor measurement configuration as well as the logged sensor measurement information as specified in 5.6.7 of 3GPP TS 136 331 V13.1.0 (2016-04);
1> store the received listOfSensorsToBeMeasured, listOfQuantitiesToBeMeasured, listOfStatisticalParametersForEachQuantity,
   listOfLoggingDurationForBuildingStatisticalParameterForEachListedSensor, listOfLoggingIntervalForEachListedSensor, listOfTracesForEachQuantity, listOfLoggingDurationForEachListedSensor, targetSensorMeasurement-AreaList, if included, in VarLogMeasConfig;
1> store the received absoluteTimeInfo, in VarLogMeasReport;
1> start timer T330 with the timer value set to the loggingDuration;
1> store the received continueMeasurementlnRRCIdleState,if included, in VarLogMeasConfig

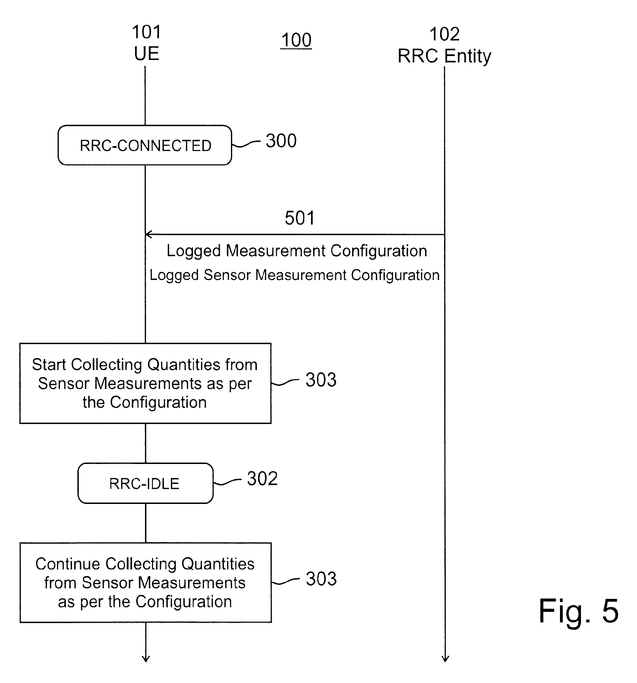

According to a third embodiment depicted in figure 5, UE 101 is operating in the second operating mode, e.g. in RRC-CONNECTED state 300 when network node 102 sends and UE 101 receives a third control plane message 501. The third control plane message may either be aforementioned LoggedMeasurementConfiguration message or aforementioned LoggedSensorMeasurementConfiguration message.

According to the third embodiment, UE 101 is configured to operate in the second operating mode, e.g. in RRC-CONNECTED state 300 as described above for the first or second embodiment. UE 101 is further configured to transition and operate in the first operating mode, e.g. in RRC-IDLE state 302 as described above for the first or second embodiment.

In contrast to these embodiments, according to the third embodiment, sensor data is collected in step 303 as described above after receipt of the third control plane message 501 while UE 101 is operating in the second operating mode. This step may be continuing or be repeated. At some point in time, UE 101 transitions into idle state 302 and step 303 is repeated. When step 302 is repeated, UE 101 is operating in the first operating mode.

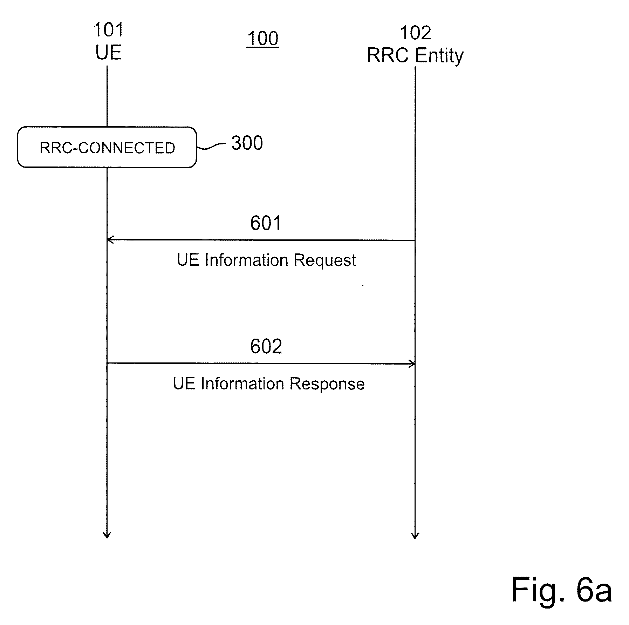

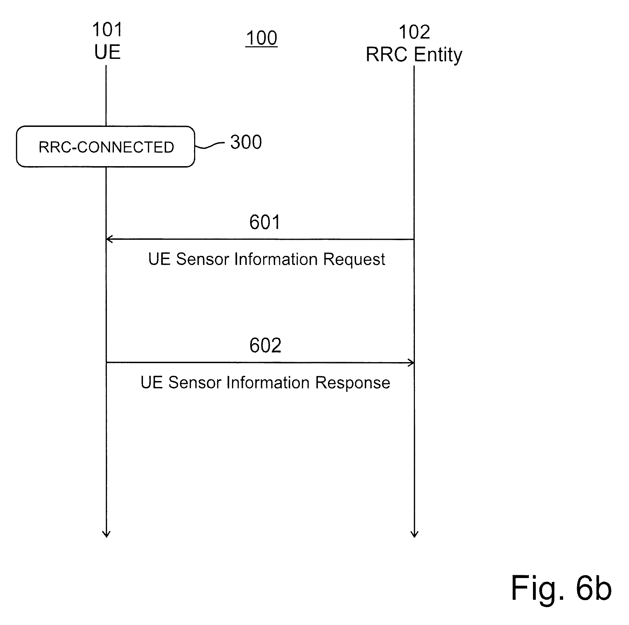

A fourth embodiment is described below referencing figure 6a and b. According to the fourth embodiment UE 101 is configured as described above in the second operating mode, i.e. connected to network node 102, e.g. in RRC-CONNECTED state 300. Network node 102 is configured accordingly as described above as well.

According to the fourth embodiment, the network may acquire sensor measurement information from UE 101 using aforementioned UEInformationRequest message and aforementioned UEInformationResponse message with the aforementioned modifications.

Accordingly, network node 102 sends a fourth control plane message 601, e.g. the UEInformationRequest. In the example the UEInformationRequest including as new elements logSensorMeasReportReq-5G is sent.

Upon receipt of the fourth control plane message 601, UE 101 responds with a fifth control plane message 602. The fifth control plane message 602 is for example a UEInformationResponse message includes as new element LoggedSensorMeasurmentReport.

Likewise, in the fourth embodiment, the network may acquire the sensor measurement information from UE 101 using aforementioned new messages UESensorInformationRequest and UESensorInformationResponse.

The third control plane message 601 and fourth control plane message 602 are in that case defined as described above.

Consequently in both aspects of the fourth embodiment this means that the information about the measured data is sent upon receipt of a corresponding control plane message, in particular a Radio Resource Control, RRC, protocol layer message, for requesting the information about the measured data. The information about the measured data in the example is sent as Radio Resource Control, RRC, protocol layer message. The measured data is received in the example as Radio Resource Control, RRC, protocol layer message as well.

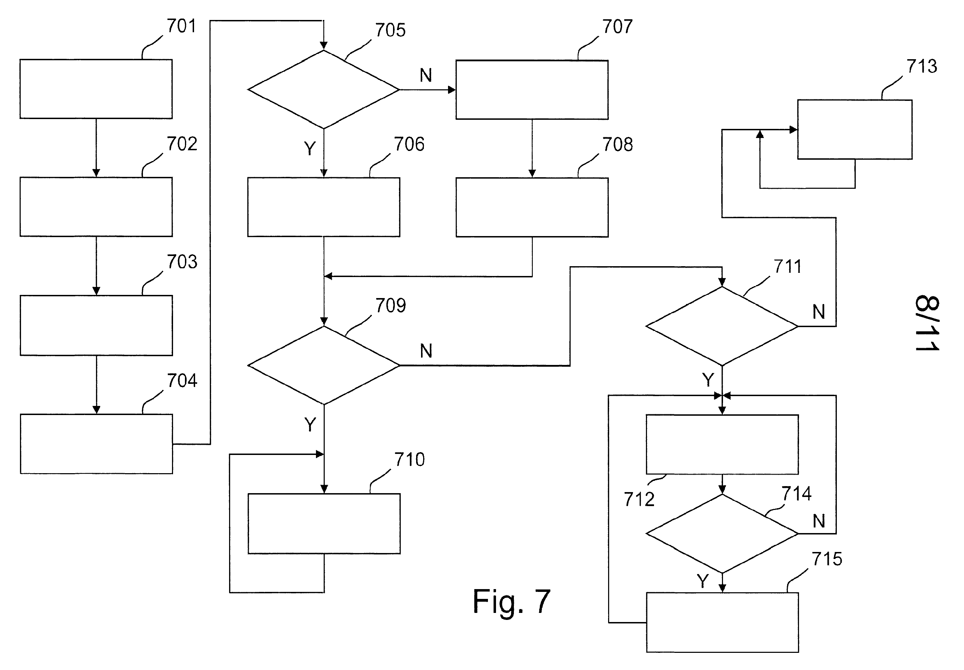

Fig. 7 depicts schematically a flow chart of a method for operating user equipment in the telecommunications network 100, according to a fifth embodiment

A measurement reporting strategy is present in the received configuration indicating that UE 101 shall continue logging the sensor measurements in RRC-CONNECTED state and reports the measurements according to the given reporting criteria. After the start, in a step 701 a sensor measurement configuration is received in a control plane message as described above.

Afterwards a step 702 is executed.

In step 702 respective configurations are detected in the control plane message and stored in aforementioned VarLogMeasConfig.

Afterwards a step 703 is executed.

In step 703 the quantities listed in the measurement configuration of the sensors listed in the measurement configuration are measured.

Afterwards a step 704 is executed.

In step 704 traces for each quantity is developed with given interval and duration. This means that information about the quantities and the interval and duration is logged.

Afterwards, in a step 705, a test is performed to determine if only traces are required or if statistical data is required as well. In particular, the corresponding LoggedMeasurementConfiguration or LoggedSensorMeasurementConfiguration field is evaluated to determine this.

If only traces are required, a step 706 is executed. Otherwise a step 707 is executed.

In step 706 the resulting traces are stored to VarLogMeasReport.

Afterwards a step 709 is executed.

In step 707 statistical parameters for the quantities are computed.

Afterwards a step 708 is executed.

In step 708, the results, i.e. statistical parameters and resulting traces, are stored to VarLogMeasReport.

Afterwards step 709 is executed.

In step 709, a test is performed to determine the reporting strategy. If a reporting strategy is defined, e.g. network triggered reporting by using e.g. aforementioned UESensorInformationRequest messages, a step 710 is executed. Otherwise a step 711 is executed.

In step 710 the measurements are updated and updated results are stored in VarLogMeasReport.

Step 710 is then repeated.

In step 711, a test is performed to determine if the UE 101 is configured for event triggered reporting. If UE 101 is configured for event triggered reporting, a step 712 is executed. Otherwise a step 713 is executed.

In step 712, the measurements are updated and updated results are stored in VarLogMeasReport.

Afterwards a step 714 is executed. In step 714 a test is performed to determine if the event occurred. If the event occurred, a step 715 is executed. Otherwise step 714 is repeated. This means that UE 101 waits for the reporting event.

In step 715, the information about the measurement data is sent. This means that the information about the measured data is triggered in the UE by a predetermined event detected by the UE. E.g. UE 101 waits until an accelerometer built into UE 101 reports an acceleration exceeding a predetermined threshold and reports the corresponding acceleration measurement data to the network node.

Afterwards step 712 is executed.

In step 713, the measurements are updated and updated results are stored in VarLogMeasReport. Additionally, measurements are reported periodically according to the configured periodical reporting scheme.

Afterwards step 713 is executed.

Exit conditions for steps 710, 712 to 715 and 713 may include turning off of UE 101 or receipt of another sensor measurement configuration or expiry of a preset logging duration.

In steps 710, 712 and 713 the measurements and/or statistical parameters are updated according to the configuration determined in step 705. Consequently measurements and/or statistical parameters may be reported according to that configuration as well.

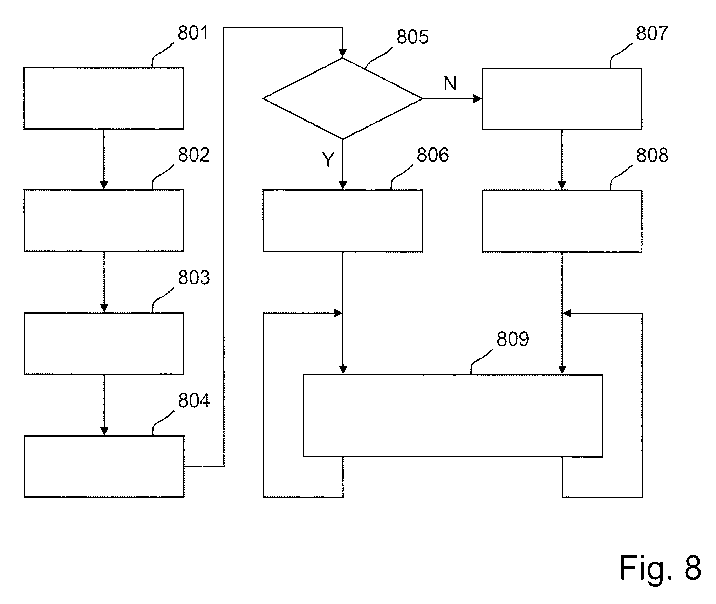

Fig. 8 depicts schematically a flow chart of a method for operating user equipment in the telecommunications network 100 according to a sixth embodiment.

In the sixth embodiment the measurement reporting strategy is not present in the received measurement configuration. This indicates in the example that measurement logging shall be done only in the RRC-IDLE state.

The network will trigger the reporting with the help of aforementioned dedicated message for triggering the reporting.

After the start, in a step 801 a sensor measurement configuration is received in a control plane message as described above.

Afterwards a step 802 is executed.

In step 802 respective configurations are detected in the control plane message and stored in aforementioned VarLogMeasConfig.

Afterwards a step 803 is executed.

In step 803 the quantities listed in the measurement configuration of the sensors listed in the measurement configuration are measured.

Afterwards a step 804 is executed.

In step 804 traces for each quantity is developed with given interval and duration. This means that information about the quantities and the interval and duration is logged.

Afterwards, in a step 805, a test is performed to determine if only traces are required or if statistical data is required as well. In particular, the corresponding LoggedMeasurementConfiguration or LoggedSensorMeasurementConfiguration field is evaluated to determine this.

If only traces are required, a step 806 is executed. Otherwise a step 807 is executed.

In step 806 the resulting traces are stored to VarLogMeasReport.

Afterwards a step 809 is executed.

In step 807 statistical parameters for the quantities are computed.

Afterwards a step 808 is executed.

In step 808, the results, i.e. statistical parameters and resulting traces, are stored to VarLogMeasReport.

Afterwards step 809 is executed.

In step 809 the measurements and/or statistical parameters are updated according to the configuration determined in step 805 and updated results are stored in VarLogMeasReport. Additionally, measurements and/or statistical parameters may be reported when requested by the network.

Afterwards step 809 is repeated.

Exit conditions for steps 809 may include turning off of UE 101 or receipt of another sensor measurement configuration or expiry of a preset logging duration. Storing in this context may also imply delete the oldest measurements if buffer is full or some other condition is met. Preferably the measurement configuration may include parameters for defining the conditions for deleting. For example a sliding window is defined by start time, duration and/or end time parameters.

Additionally the information about the measurement may be sent by UE 101 upon successful establishment of an uplink from the UE 101 to the wireless telecommunications network 100. This may be after or during a transition from operating the UE 101 in the first operating mode, e.g. the RRC-IDLE state, to operating the UE 101 in the second operating mode, e.g. the RRC-CONNECTED state. The network node 102 is in that case adapting accordingly. Preferably the information about the measured data is requested by network node 102 upon successful establishment of an uplink from the UE 101 to the telecommunications network 100.

Accordingly, UE 101 comprises a processor, memory and a transceiver and is configured for receiving information about a measurement configuration in a Radio Resource Control layer message, configuring the user equipment for measuring data according to the received information, operating the UE 101 for storing information about measured data according to the configuration, or operating the UE 101 for storing information about measured data according to the configuration and/or for sending information about measured data in an uplink to the wireless telecommunications network 100.

Furthermore network node 102 comprises also a processor, memory and a transceiver, and is configured for sending, addressed to a UE 101, information about a measurement configuration in a Radio Resource control layer message, for configuring the UE 101 for measuring data according to the received information, operating the network node 102 for waiting for information about measured data stored by the UE 101 according to the configuration, or operating the a network node 102 for receiving information about measured data in an uplink to the wireless telecommunications network 100.

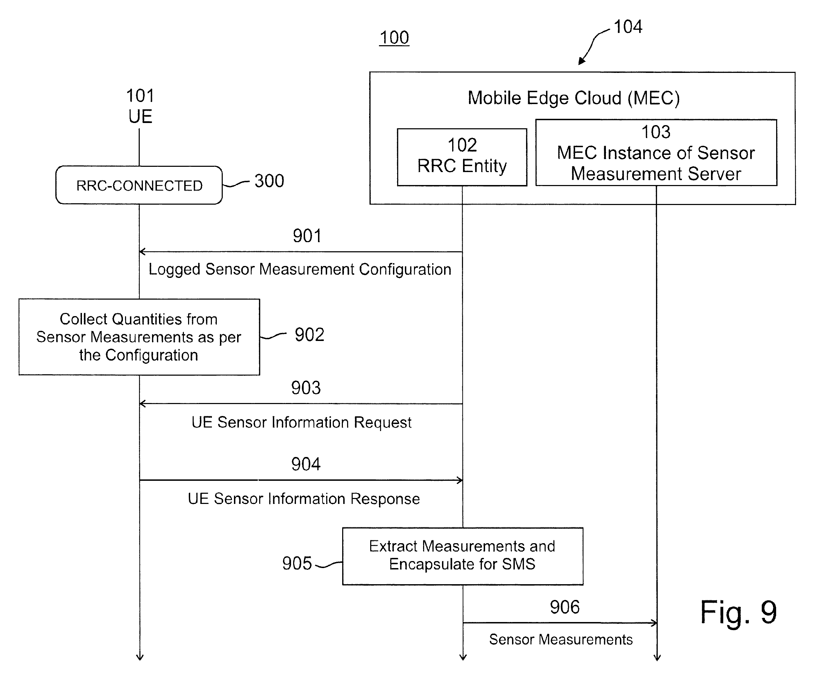

Fig. 9 depicts schematically a sequence diagram of a method for operating the telecommunications network 100 according to a seventh embodiment.

The functionality of UE 101 and network node 102 is essentially as described in the aforementioned embodiments. Additionally, a further network node 103, e.g. a mobile edge cloud entity is present. On this entity a network function is implemented. The further network node 103 and the network node 102 are located nearby each other in a Mobile Edge Cloud 104. Network node 102 is used by UE 101 to access the telecommunications network. Near in this context is not limited to physically near but also to any connection with very low latency and delay characteristics. For example the latency may be in a range of 10 to 100 ms, preferably less than 50 ms.

According to the seventh embodiment, the further network node 103 is adapted to execute driver assist function for assisting vehicles to avoid collision. Each participating vehicle may comprise an individual UE 101 that measures information about the environment of the respective vehicle, e.g. using a sensor build into UE 101 or attached to UE 101.

According to the seventh embodiment, a LiDAR sensor is attached to UE 101. A method for operating LiDAR sensor and driver assist function is described below referencing Fig. 9. UE 101 is configured as described for the first embodiment or second embodiment in the second operating mode, i.e. connected state 300, preferably RRC-CONNECTED state.

After the start a fifth control plane message 901 is sent from network node 102 to UE 101 as described e.g. for the third control plane message 501 using LoggedMeasurementConfiguration or LoggedSensorMeasurementConfiguration.

Upon receipt of the fifth control plane message 901, UE 101 starts collecting quantities from sensor measurements in a step 902 according to the configuration, as described e.g. in step 303. In this example Light Detection And Ranging or Light, Imaging, Detection And Ranging, LiDAR, sensor data is collected. The collection of data may be continuously repeated.

Periodically or when triggered by the network function for driver assist, the network node 102 sends a sixth control plane message 903, e.g. Radio Resource Control message UEInformationRequest as described for the fourth control plane message 601. Upon receipt of the sixth control plane message UE 101 responds with a seventh control plane message 904, e.g. Radio Resource Control message UEInformationResponse as described for the fifth control plane message 602.

Aforementioned new messages UESensorInformationRequest and UESensorInformationResponse may be used as well.

Upon receipt of the seventh control plane message 904, in a step 905, network node 102 extracts the information about the measurement from the seventh control plane message 904, encapsulate it in a different format, e.g. short message service, SMS, format, and forward it in a eighth message 906 to the further network node 103.

The measurements are carried out and can be reported as described above by UE 101. Furthermore this information arrives at the network function faster than other methods. Using Mobile edge computing for executing the driver assist function and using RRC based transport of the LiDAR measurement then reduces the latency significantly as compared to transport of LiDAR measurement on a higher transport layer.

This means that a network function for driver assistance or a function facilitating autonomous vehicle driving or flying can evaluate the LiDAR sensor data to detect an approximation of a vehicle having a UE 101 to an object in the proximity of that vehicle. This may be particularly relevant if a vehicle is approaching an object, e.g. another vehicle, fast. In that case, quick driver assistance may be required.

In another aspect, event triggered reporting as described above may be implemented additionally or alternatively in a system according to the seventh embodiment. The event is for example, that the LiDAR detects that the vehicle is at proximity of less than 100 m to an object.

According to an eighth embodiment, aforementioned event triggered reporting additionally triggers forwarding reported data, as broadcast or multicast, to other UEs 105.

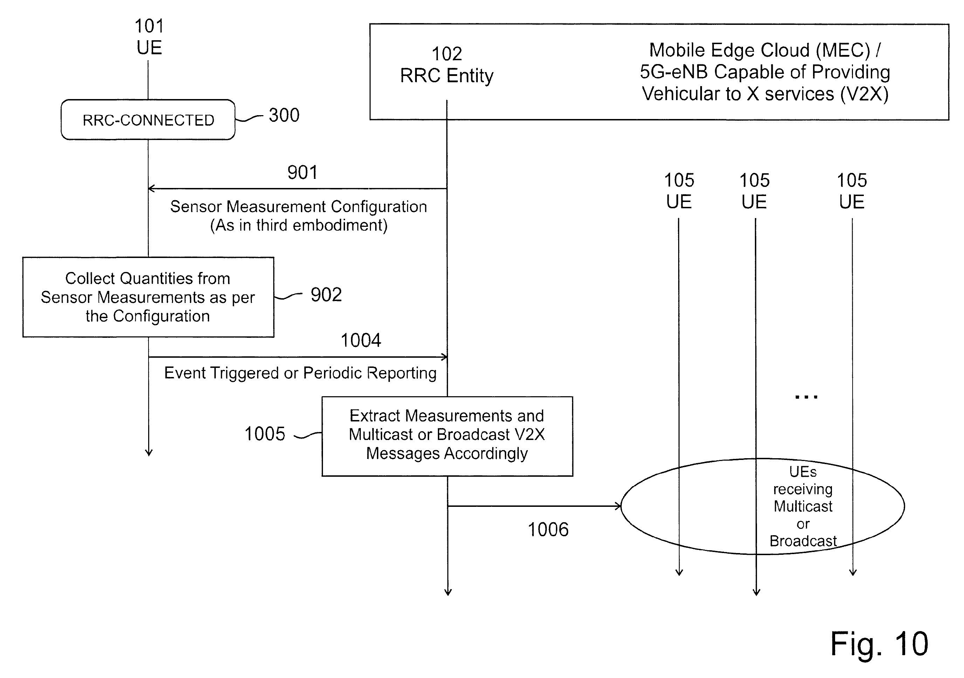

This is described below referencing figure 10. Elements of telecommunications network 100 that are the same as in the seventh embodiment are labelled in figure 10 with identical reference sign.

Additionally to the seventh embodiment, other UEs 105 can connect to network node 102.

The functionality of UE 101 and network node 102 is essentially as described in the aforementioned embodiments. Network node 102 is used by UE 101 and the further UEs 105 to access the telecommunications network. This means the network node 102 provides for example a cell in which UE 101 and further UEs 105 can access the wireless telecommunications network 100. According to the eighth embodiment, the network node is capable of providing additional functionality by inspecting received messages, extracting measurement data contained therein, understanding the measurement data and sending broadcast or multi cast messages. In one aspect a UE 101 could be of a category type "VEHICLE" or "CAR", e.g. according to UE category types. In the example, if a message having a UE type "VEHICLE" is received from a UE 101, it is sent as broadcast or multicast to further UE 102 as described. Consequently LIDAR measurement information is quickly distributed in the cell.

According to the eighth embodiment, UE 101 measures information about the environment of the UE 101 or of a respective vehicle, e.g. using a sensor build into UE 101 or attached to UE 101.

According to the eighth embodiment, a LiDAR sensor is attached to UE 101 as described for the seventh embodiment. UE 101 is configured as described for the first embodiment or second embodiment in the second operating mode, i.e. connected state 300, preferably RRC-connected state. The other UEs 105 may be in first or second operating mode, i.e. able to listen to broadcast or multicast from network node 102.

After the start the fifth control plane message 901 is sent from network node 102 to UE 101 as described e.g. for the seventh embodiment using LoggedMeasurementConfiguration or LoggedSensorMeasurementConfiguration.

Upon receipt of the fifth control plane message 901, UE 101 starts collecting quantities from sensor measurements in a step 902 according to the configuration, as described e.g. for the seventh embodiment.

When a predetermined event occurs, UE 101 sends a ninth control plane message 1004, e.g. a Radio Resource Control layer protocol message, to network node 102.

Upon receipt of the ninth control plane message 1004, in a step 1005, network node 102 extracts the information about the measurement from the ninth control plane message 1004, e.g. a Radio Resource Control layer protocol message, to determine reported data. The network node 102 determines if the reported data meets a condition to forward reported data as broadcast or multicast to other UEs 105. The network node 102 forwards, i.e. broadcasts or multicasts, the reported data in a tenth control plane message 1006, e.g. a Radio Resource Control layer protocol message, to the further UEs 105 if the condition is met, or discards the reported data otherwise.

This way the messages are processed in the network node 102 instead of executing a network function on the further network node 103 as described for the seventh embodiment. Therefore other UEs 105 may be informed with low latency and delay of the reported data.

The condition is for example that any event triggered message is forwarded, or a priority of the reported data that is sent in the ninth control plane message 1004.

The measurements are carried out and can be reported as described above by UE 101. Furthermore this information arrives to other UEs 105 faster than with other methods. Using RRC based transport of for example the LiDAR measurement then reduces the latency significantly as compared to transport of LiDAR measurement on a higher transport layer to network functions for processing.

User Equipment, UE, could be implemented as a device with a radio interface, e.g. smartphone, tablet, smartwatch, sensor, actuator, equipment inside a vehicle, machine-to-machine equipment, or else. The radio network is e.g. an Orthogonal Frequency Division Multiplex, OFDM, type network, e.g. UF-OFDM, F-OFDM, ZT-s-OFDM, P-OFDM, FC-OFDM, or another multi-carrier network, e.g. FS-FBMC, QAM-FBMC, etc. E.g. QAM - Quadrature Amplitude Modulation and/or QPSK - Quadrature Phase Shift Keying are used as modulation technique. A network node could be implemented as a base station or a processing part of a base station. The base station could be an LTE eNodeB, a 5G transmission point, a WiFi access point, or else. The base station is in particular suitable to serve a radio cell and to connect user equipment inside the cell to the radio network. The base station is e.g. implemented as a stand-alone equipment including e.g. a processing part and a radio interface, or as a processing part and a remotely located so called Remote Radio Head, RRH. The processing part is e.g. implemented using a processor and a memory. The processor is implemented using e.g. a DSP, FPGA, or the like or a combination thereof. The memory is implemented using e.g., a RAM, ROM, DDR, Flash memory, or the like, or a combination thereof. The memory stores e.g. computer readable instructions, thus instructions executable by the processor. The processing part processes data and control info to be transmitted to the user equipment and generates messages including the data and/or control info to be transmitted, e.g. RRC Connection Request Message, RRC Connection Reconfiguration message, RRC Connection Complete message, RRC Connection Setup message, etc., and manages establishment, maintenance and release of an RRC connection between the UE and E-UTRAN and UE measurement reporting and control of the reporting.

In an example of operating user equipment 101 it is assumed that UE 101 is RRC-connected state 300 via a first link to a network node 102 that functions as base station, BS, according to Long Term Evolution, LTE. UE 101 comprises in the example, two sensors, e.g. accelerometer and gyroscope. The BS decides to provide the UE 101 with a second link using one of the mmWave APs available nearby the UE 101. In order to speed up the beamforming, the BS, e.g. network node 102, should track rotational movements and acceleration of the UE 101. For this purpose, the BS sends a sensor measurement configuration to the UE 101, e.g. a control plane message for sensor measurement configuration, as describe above for message 501 and step 701. This way BS instructs UE 101 to collect measurements for example from the accelerometer and from the gyroscope with a certain measurement period. The UE 101 detects the measurement configurations, e.g. as described in step 702 for the two sensors. According to the received configurations, the UE 101 starts collecting measurements from the specified sensors, as described in step 703 and stores them locally as described in step 704. In this specific embodiment, the BS, e.g. network node 102, has requested to store traces as described in step 706.

In one aspect of the example, BS may have informed the UE 101 that such traces will be requested upon specific event.

In this case, at some point in time, the BS detects a degradation of the mmW-link quality as trigger event and therefore requests to the UE 101 to send the most recent measurements of accelerometer and gyroscope.

The BS processes the measurements in order to derive the most likely cause of degradation. Once derived the most likely cause of degradation, the BS will decide what is the best next mmWave beam from the same mmWave AP. Additionally or alternatively BS prepares a handover to a new mmWave AP for the UE 101.

In another aspect of the example, BS may have informed the UE 101 that aforementioned traces should be sent back to the network periodically.

The UE 101 then reports periodically the most recent measurements of accelerometer and gyroscope. The BS processes the measurements in order to anticipate possible cause of link quality degradation. Once that a possible degradation is predicted, i.e. anticipated, the BS will decide what is the best next mmWave beam from the same mmWave AP. Alternatively or additionally it should prepare a handover to a new mmWave AP for the UE 101.

Specific algorithms on how to use the sensor measurements in prediction for beamforming are presented for example in A. W. Doff, Kishor Chandra, R. Venkatesha Prasad: "Sensor Assisted Movement Identification and Prediction for Beamformed 60 GHz Links", 13 Mar 2015, arXiv:1502.04054v2.

A sensor according to this application is in particular measuring parameters related to movement of a user equipment UE. Such movement can be measured using one or more physical sensors including e.g. at least one of the following: accelerometer, gyroscope, motion sensors, as well as others. Physical sensors could also be nearby sensors which are controlled by the UE. A UE could also be located in a vehicle, e.g. comprising a so called LiDAR (light detection and ranging) sensor including e.g. at least one of the following: stereo vision cameras, GPS inertial navigation system, and machine-driven algorithms for path planning and obstacle detection/avoidance. The sensor(s) are e.g. capable of sensing the surrounding environment for e.g. supporting autonomous or automated driving. A LiDAR sensor maps the entire environment or part thereof and creates a 3D reconstruction from which the vehicle can determine decisions for supporting autonomous navigation. Autonomous cars may include sensors to detect surroundings using a variety of techniques such as radar, lidar, GPS, odometry, and computer vision. Advanced control systems interpret sensor information to identify appropriate navigation paths, as well as obstacles and relevant signage. Autonomous cars have on-board control systems that are capable of analyzing sensor data to distinguish between different cars on the road, which can be used to support planning a path to a desired destination. The control system comprises also a radio interface to communicate with a base station. Control signals are exchanged using e.g. the RRC protocol. Using RRC is particularly suited for ultra low latency applications. A base station e.g. configures a UE remotely via RRC to perform certain measurements, receives via RRC the requested measurement data, and forwards the measurement data or information related thereto or calculated therefrom via RRC to another UE located in the same cell or sector within a cell provisioned by the base station or to a neighboring base station for provision to a UE located in the neighboring cell. The remote configuration and provision of real-time LiDAR sensor data can be used in a variety of applications including e.g. autonomous vehicles, vehicle safety systems including e.g. collision prevention, 3D mobile mapping, 3D aerial mapping and security, drones, unmanned aerial vehicle (UAV), robotics, industrial Internet of Things.
A sensor according to this application is in particular not measuring the classical radio link parameters related to the radio link between the base station and the UE, like e.g. channel quality, CQI (channel quality indicator), power of pilots, RSRP (Reference Signal Received Power) and RSRQ (Reference Signal Received Quality), RSSI (Received Signal Strength Indicator), RSRP (Reference Signal Received Power), SINR/SNR (Signal-to-Interference/Noise Ratio). Such power measurements are e.g. performed using a peak or envelope detector comprising e.g. an operational amplifier, a diode, and a capacitor to capture and hold the peak value of the input radio frequency RF signal.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIGs., including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.
Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, other diagrams and the like represent various processes which may be substantially represented in computer readable medium and so executed by a computer or processor, whether or not such computer or processor is explicitly shown.

At least parts of the above described radio communications network including sender or receiver could be implemented using network functions virtualization (NFV). NFV is a network architecture that makes use of technologies of computer virtualization. Entire network equipment like sender or receiver or parts thereof or part of their functions can be virtualized using software building blocks that may connect, or interact, to create communication services. A virtualized network function of e.g. a sender or receiver may include at least one virtual machine running different software and processes, on top of standard high-volume servers, switches and storage, or a cloud computing infrastructure, instead of having customized hardware appliances for each network function. As such a sender or receiver function may be implemented in a computer program using a computer program product embodied on a non-transitory computer readable medium for performing operations, wherein the computer program product comprises instructions, that when executed by a processor, perform the operations of the specific eNodeB, network node or UE function.

## Claims

1. A method of operating user equipment in a wireless telecommunications network (100), comprising:
receiving (701; 801) at a user equipment (101) information about a measurement configuration for a sensor in a message (301, 401, 501) according to a control plane protocol for procedures related to radio access,
configuring the user equipment (101) for measuring data according to the received information,
operating (710, 712, 713; 809) the user equipment (101) for storing information about measured data according to the configuration, or
operating (710, 712, 713; 809) the user equipment (101) for sending (713, 715) information about measured data in an uplink to the wireless telecommunications network (100).

2. The method of claim 1, wherein the information about the measured data is sent as Radio Resource Control, RRC, protocol layer message.

3. The method of any of the preceding claims, wherein the information about the measured data is sent (602) upon receipt of a corresponding Radio Resource Control, RRC, protocol layer message (601) for requesting the information about the measured data.

4. The method of any of the preceding claims, wherein sending the information about the measured data is triggered (714) in the user equipment (101) by a predetermined event detected by the user equipment (101).

5. A method of operating a network node of a wireless telecommunications network (100), comprising:
sending (301, 401, 501), addressed to a user equipment (101), information about a measurement configuration for a sensor in a message according to a control plane protocol for procedures related to radio access, for configuring the user equipment (101) for measuring data according to the received information,
operating a network node (102) for waiting for information about measured data stored by the user equipment (101) according to the configuration, or
operating the network node (102) for receiving information about measured data from the user equipment (101) in an uplink to the wireless telecommunications network (100).

6. The method of claim 5, wherein information about the measured data is received as Radio Resource Control, RRC, protocol layer message.

7. The method of any of claims 5, or 6, wherein information about the measured data is requested by sending of a corresponding Radio Resource Control, RRC, protocol layer message (601) for requesting the information about the measured data.

8. The method of any of the preceding claims, wherein the control plane protocol for procedures related to radio access is a Radio Resource Control, RRC, protocol, in particular according to 3GPP TS 136 331 V13.1.0 (2016-04) or later.

9. A user equipment (101) for operating in a wireless telecommunications network (100) comprising a processor, memory and a transceiver, wherein the user equipment (101) is configured for:
receiving information about a measurement configuration for a sensor in a message according to a control plane protocol for procedures related to radio access, configuring the user equipment (101) for measuring data according to the received information,
operating the user equipment (101) for storing information about measured data according to the configuration, or
operating the user equipment (101) for sending information about measured data in an uplink to the wireless telecommunications network (100).

10. User equipment (101) according to claim 9, wherein the information about the measured data is sent as Radio Resource Control, RRC, protocol layer message.

11. User equipment (101) according to claim 9 or 10, wherein the information about the measured data is sent upon receipt of a corresponding Radio Resource Control, RRC, protocol layer message for requesting the information about the measured data.

12. User equipment (101) according to any of claims 9 to 11, wherein sending the information about the measured data is triggered (714) in the user equipment (101) by a predetermined event detected by the user equipment (101).

13. User equipment (101) according to any of claims 9 to 12, wherein user equipment (101) is operated for storing information about measured data according to the configuration when user equipment (101) is in Radio Resource Control Idle, RRC-IDLE, state.

14. User equipment (101) according to any of claims 9 to 13, wherein user equipment (101) is configured to collect sensor data related to movement of user equipment'(101).

15. User equipment (101) according to any of claims 9 to 14, wherein user equipment (101) is configured to process at least one of parameters:
listOfQuantitiesToBeMeasured,
listOfStatisticalParametersForEachQuantity, listOfLoggingDuration,
listOfLoggingIntervalForEachListedSensor, listOfTracesForEachQuantity,
listOfLoggingDurationForTraces,
targetSensorMeasurement-AreaList,
listOfReportingStrategyForEachQuantity.

16. A network node (102) for operating in a wireless telecommunications network (100) comprising a processor, memory and a transceiver, wherein the network node (102) is configured for:
sending, addressed to a user equipment (101), information about a measurement configuration for a sensor in a message according to a control plane protocol for procedures related to radio access, for configuring the user equipment (101) for measuring data according to the received information,
operating the network node (102) for waiting for information about measured data stored by the user equipment (101) according to the configuration, or operating the network node (102) for receiving information about measured data in an uplink to the wireless telecommunications network (100).

17. The network node of claim 16, configured to broadcast or multicast a Radio Resource Control, RRC protocol layer message that includes information about a Light Detection And Ranging, LIDAR, measurement received from user equipment (101) to other user equipment (105) are in the same cell as user equipment (101).

18. A user equipment (101) for operating in a wireless telecommunications network (100) comprising a processor, memory and a transceiver, wherein the user equipment (101) is configured for:
receiving information about measurement results of at least one sensor related to a further user equipment via a radio connection to a network node (102) and in a message according to a control plane protocol for procedures related to radio access, and
operating the user equipment (101) dependent on the received information.

## Amended claims

### Amended claims in accordance with Rule 137(2) EPC.

1. A method of operating user equipment in a wireless telecommunications network (100), comprising:
receiving (701; 801) at a user equipment (101) information about a measurement configuration for a sensor in a message (301, 401, 501) according to a control plane protocol for procedures related to radio access,
configuring the user equipment (101) for measuring data according to the received information,
operating (710, 712, 713; 809) the user equipment (101) for storing information about measured data according to the configuration, or
operating (710, 712, 713; 809) the user equipment (101) for sending (713, 715) information about measured data in an uplink to the wireless telecommunications network (100).

2. The method of claim 1, wherein the information about the measured data is sent as Radio Resource Control, RRC, protocol layer message.

3. The method of any of the preceding claims, wherein the information about the measured data is sent (602) upon receipt of a corresponding Radio Resource Control, RRC, protocol layer message (601) for requesting the information about the measured data.

4. The method of any of the preceding claims, wherein sending the information about the measured data is triggered (714) in the user equipment (101) by a predetermined event detected by the user equipment (101) .

5. A method of operating a network node of a wireless telecommunications network (100), comprising:
sending (301, 401, 501), addressed to a user equipment (101), information about a measurement configuration for a sensor in a message according to a control plane protocol for procedures related to radio access, for configuring the user equipment (101) for measuring data according to the received information,
operating a network node (102) for waiting for information about measured data stored by the user equipment (101) according to the configuration, or
operating the network node (102) for receiving information about measured data from the user equipment (101) in an uplink to the wireless telecommunications network (100).

6. The method of claim 5, wherein information about the measured data is received as Radio Resource Control, RRC, protocol layer message.

7. The method of any of claims 5, or 6, wherein information about the measured data is requested by sending of a corresponding Radio Resource Control, RRC, protocol layer message (601) for requesting the information about the measured data.

8. The method of any of the preceding claims, wherein the control plane protocol for procedures related to radio access is a Radio Resource Control, RRC, protocol.

9. A user equipment (101) for operating in a wireless telecommunications network (100) comprising a processor, memory and a transceiver, wherein the user equipment (101) is configured for:
receiving information about a measurement configuration for a sensor in a message according to a control plane protocol for procedures related to radio access, configuring the user equipment (101) for measuring data according to the received information,
operating the user equipment (101) for storing information about measured data according to the configuration, or
operating the user equipment (101) for sending information about measured data in an uplink to the wireless telecommunications network (100).

10. User equipment (101) according to claim 9, wherein the information about the measured data is sent as Radio Resource Control, RRC, protocol layer message.

11. User equipment (101) according to claim 9 or 10, wherein the information about the measured data is sent upon receipt of a corresponding Radio Resource Control, RRC, protocol layer message for requesting the information about the measured data.

12. User equipment (101) according to any of claims 9 to 11, wherein sending the information about the measured data is triggered (714) in the user equipment (101) by a predetermined event detected by the user equipment (101) .

13. User equipment (101) according to any of claims 9 to 12, wherein user equipment (101) is operated for storing information about measured data according to the configuration when user equipment (101) is in Radio Resource Control Idle, RRC-IDLE, state.

14. User equipment (101) according to any of claims 9 to 13, wherein user equipment (101) is configured to collect sensor data related to movement of user equipment (101).

15. User equipment (101) according to any of claims 9 to 14, wherein user equipment (101) is configured to process at least one of parameters:
listOfQuantitiesToBeMeasured,
listOfStatisticalParametersForEachQuantity, listOfLoggingDuration,
listOfLoggingIntervalForEachListedSensor, listOfTracesForEachQuantity,
listOfLoggingDurationForTraces,
targetSensorMeasurement-AreaList,
listOfReportingStrategyForEachQuantity.

16. A network node (102) for operating in a wireless telecommunications network (100) comprising a processor, memory and a transceiver, wherein the network node (102) is configured for:
sending, addressed to a user equipment (101), information about a measurement configuration for a sensor in a message according to a control plane protocol for procedures related to radio access, for configuring the user equipment (101) for measuring data according to the received information,
operating the network node (102) for waiting for information about measured data stored by the user equipment (101) according to the configuration, or operating the network node (102) for receiving information about measured data in an uplink to the wireless telecommunications network (100).

17. The network node of claim 16, configured to broadcast or multicast a Radio Resource Control, RRC protocol layer message that includes information about a Light Detection And Ranging, LIDAR, measurement received from user equipment (101) to other user equipment (105) are in the same cell as user equipment (101).

18. A user equipment (101) for operating in a wireless telecommunications network (100) comprising a processor, memory and a transceiver, wherein the user equipment (101) is configured for:
receiving information about measurement results of at least one sensor related to a further user equipment via a radio connection to a network node (102) and in a message according to a control plane protocol for procedures related to radio access, and
operating the user equipment (101) dependent on the received information.
